# EUROPÄISCHE PATENTSCHRIFT

(11) **EP 4 545 315 B1**
(45) Veröffentlichungstag und Bekanntmachung des Hinweises auf die Patenterteilung: **29.07.2026**
(21) Anmeldenummer: 24202206.9
(22) Anmeldetag: 24.09.2024
(51) Int. Cl.: B60C 11/11, B60C 11/13, B60C 11/03

(54) **FAHRZEUGREIFEN**
VEHICLE TYRE
BANDAGE PNEUMATIQUE POUR VÉHICULES

(30) Priorität: 27.10.2023 DE 102023210697
(43) Veröffentlichungstag der Anmeldung: 30.04.2025
(73) Patentinhaber: Continental Reifen Deutschland GmbH, 30175 Hannover (DE)
(72) Erfinder: Sudikatis, Florian, 30175 Hannover (DE)
(74) Vertreter: Continental Corporation

(56) Entgegenhaltungen:
- JP-A- 2009 269 421
- JP-U- S 636 902
- US-A1- 2017 008 350
- US-A1- 2023 278 370
- US-B2- 11 498 368

## Beschreibung

Die Erfindung betrifft einen Fahrzeugreifen, bevorzugt für ein Leichtfahrzeug, besonders bevorzugt für ein Motorrad und/oder ein Fahrrad und/oder einen Rollstuhl, mit einem laufrichtungsgebunden gestalteten, eine definierten Abrollrichtung bei Vorwärtsfahrt sowie eine Mittelumfangslinie aufweisenden, profilierten Laufstreifen, Seitenwänden und Wulstbereichen, wobei der Laufstreifen in Umfangsrichtung langgestreckte blockartige Erhebungen aufweist, zu welchen am nächsten zur Mittelumfangslinie und am nächsten zu den Seitenwänden befindliche Erhebungen gehören, wobei jede Erhebung jeweils eine Deckfläche mit zwei in Richtung der langgestreckten Gestaltung verlaufenden Längskanten - eine weiter laufstreifenaußenseitig und einer weiter laufstreifeninnenseitig befindliche Längskante - aufweist.

Ein derartiger Fahrzeugreifen, welcher insbesondere für Fahrräder, Scooter, Motorräder, PKWs, Nutzfahrzeuge oder Traktoren vorgesehen ist, ist beispielsweise aus der US 11 498 368 B2 bekannt. Dieser Fahrzeugreifen weist einen laufrichtungsgebunden gestalteten Laufstreifen mit in Umfangsrichtung langgestreckten blockartigen Erhebungen auf, wobei in jeder Laufstreifenhälfte zwei Reihen von in Umfangsrichtung aufeinanderfolgenden Erhebungen vorgesehen und somit am nächsten zur Mittelumfangslinie des Laufstreifens und am nächsten zu den Seitenwänden befindliche Erhebungen vorgesehen sind. Jede Erhebung weist eine Deckfläche mit zwei in Richtung der langgestreckten Gestaltung der Erhebung ausgerichteten Längskanten, nämlich eine weiter laufstreifenaußenseitig und eine weiter laufstreifeninnenseitig befindliche Längskante, auf. Dieser Fahrzeugreifen soll gute Gripeigenschaften beim Fahren von Kurven aufweisen.

Die US 2017/0008350 A1 offenbart einen Motorradreifen mit einem Laufstreifen mit blockartigen Erhebungen, wobei in schulterseitigen und halbmittigen Reihen jeweils in Umfangsrichtung hintereinander angeordnete Erhebungen vorgesehen sind, wobei die aus verschiedenen Reihen stammenden Erhebungen in axialer Richtung jeweils paarweise benachbarte sind, sodass zwischen solchen Erhebungen je eine kurzes rillenartiges Profilnegativ verläuft. Im Reifenquerschnitt durch das Profilnegativ betrachtet, ist der Abstand vom tiefsten Punkt des Profilnegativs zur laufstreifeninnenseitigen Kante der angrenzenden, in der schulterseitigen Reihe befindlichen Erhebung größer als der Abstand vom tiefsten Punkt des Profilnegativs zur laufstreifenaußenseitigen Kante der angrenzenden, in der halbmittigen Reihe befindlichen Erhebung. Dieser Motorradreifen soll gute Gripeigenschaften auf unbefestigtem Untergrund aufweisen.

Die JP 2009 269 421 A offenbart einen Fahrzeugreifen mit einem Laufstreifen mit sechs Profilblockreihen aus in Umfangsrichtung aufeinanderfolgenden Profilblöcken. Die Profilblöcke der drei in der einen Laufstreifenhälfte befindlichen Profilblockreihen weisen, im Reifenquerschnitt betrachtet, geneigte, in Richtung Laufstreifenrand abfallende Blockaußenflächen auf. Der Reifen soll gute Eigenschaften beim Fahren von Kurven aufweisen.

Die JP S63 6902 U offenbart ein Fahrzeugreifen für ein Zweirad, wobei der Fahrzeugreifen einen Laufstreifen mit einer mittleren, zwei halbmittigen und zwei schulterseitigen Blockreihen aus blockartigen Erhebungen aufweist. Die Außenkontur des Laufstreifens setzt sich ausgehend von der Reifenäquatorialebene zu jedem seitlichen Laufstreifenrand aus drei Radien zusammen, wodurch die Traktionseigenschaften und die Performance beim Fahren von Kurven verbessert sein sollen.

Aus der US 2023/278370 A1 ist ein Motorradreifen mit einem Laufstreifen mit blockartigen Erhebungen bekannt. Die schulterseitigen blockartigen Erhebungen weisen eine an die laufstreifeninnenseitig befindliche Kante anschließende Flanke auf, welche, im Reifenquerschnitt betrachtet, aus zwei flach V-förmig aneinander anschließenden Flankenabschnitten zusammengesetzt ist, wodurch sich günstige Fahreigenschaften im Gelände erzielen lassen sollen.

Derartige Fahrzeugreifen sind insbesondere Fahrradreifen, die für den urbanen Einsatz, als Trekking-Reifen, Cargo-Reifen, Rennreifen oder Reifen der Kategorie GRAVEL, letztere mit einem hohen Anteil an Einsatz auf Straßen, vorgesehen sind. Ein derartiger Reifen ist beispielsweise der auf der Webseite der Firma Continental abgebildete Reifen CONTACT Plus City, siehe https://www.continental-reifen.de/b2c/bicycle/tires/contact-plus-city/ (abgerufen am 20.9.2023) sowie der Reifen mit der Bezeichnung RIDE Tour, siehe https://www.continental-reifen.de/b2c/bicycle/tires/ride-tour/ (abgerufen am 20.9.2023). Fahrradreifen mit ausgeprägten Stollen in der Profilierung des Laufstreifens sorgen durch ihre Kanten auf rauen bzw. Off-Road-Untergründen für einen formschlüssigen Kraftschluss und dadurch für gute Griffeigenschaften, wobei gilt, je mehr Kanten vorhanden sind umso besser sind die Griffeigenschaften. Es ist daher auch bekannt, auf den Stollen Einschnitte auszubilden, welche die Stollen in der Kontaktfläche mit dem Untergrund teilen oder aus der Stollenoberfläche herausgeschnittene Körper sind. Bei eher geschlossen ausgeführten Laufstreifenprofilierungen, etwa für den urbanen Einsatz, den Einsatz als Trekking-Reifen oder GRAVEL Reifen mit erhöhtem Straßenanteil, ist es ferner vorteilhaft, den Laufstreifen zu den Seitenwänden hin abzusenken, um die Steifigkeitssprünge zwischen Laufstreifen und Seitenwand zu reduzieren und einen gleichmäßigeren Abrieb des Laufstreifens in den Schulterbereichen zu erreichen. Dadurch sind die Kanten von Einschnitten schwieriger mit dem Untergrund in Eingriff zu bringen. Bei dünnen Laufstreifen, wie beispielsweise bei Rennreifen oder GRAVEL Reifen, ist zudem die Möglichkeit, übliche Einschnitte auszubilden, begrenzt. Darüber hinaus verfangen sich in Einschnitten leicht Steine, etwa bei Kurvenfahrt auf entsprechendem Untergrund, zusätzlich eindringendende weitere Steine können sogar ein Zusetzen der Einschnitte bewirken. Ein vollständiges Zusetzen von Einschnitten kann auch beim Fahren auf matschigem Untergrund erfolgen. Einschnitte haben zudem den Nachteil, dass sie bei Querbelastung zum Schließen neigen, sodass ihre Kanten dann kaum noch Griff generieren können.

Der Erfindung liegt die Aufgabe zugrunde, bei einem Fahrzeugreifen der eingangs genannten Art, insbesondere bei solchen mit dünneren Laufstreifen, zur Sicherstellung guter Griffeigenschaften eine besonders effektive Alternative zu Einschnitten zur Verfügung zu stellen.

Gelöst wird die gestellte Aufgabe erfindungsgemäß dadurch, dass zu den Erhebungen solche gehören, welche zwischen den am nächsten zur Mittelumfangslinie befindlichen Erhebungen und den am nächsten zu den Seitenwänden befindlichen Erhebungen angeordnet sind, wobei die Längskanten jeweils in sämtlichen Erhebungen gleichsinnig geneigt unter einem Winkel von 10° bis 30°, insbesondere 15° bis 25°, zur Umfangsrichtung verlaufen, wobei jeweils die weiter laufstreifeninnenseitig befindliche Längskante sich gegenüber einer Basisfläche der Erhebung in einer größeren Höhe befindet als die weiter laufstreifenaußenseitig befindliche Längskante und wobei - bezüglich der Ausgestaltung der Erhebungen, die im Bereich zwischen der Mittelumfangslinie und der Seitenwand aufeinanderfolgen - jeweils die am nächsten zur Mittelumfangslinie befindliche Erhebung, bezogen auf die weiter laufstreifeninnenseitig befindliche Längskante, die am niedrigsten ausgeführte Erhebung und die am nächsten zur Seitenwand befindliche Erhebung, bezogen auf die weiter laufstreifeninnenseitig befindliche Längskante, die am höchsten ausgeführte Erhebung ist.

Bei Fahrzeugreifen mit erfindungsgemäß gestalteten Laufstreifen kann durch die blockartigen Erhebungen auf eine Ausgestaltung mit Einschnitten verzichtet werden, da die Erhebungen eine Vielzahl von Griffkanten in einer durch den erwähnten Neigungswinkel optimalen Position bezüglich der Abrollrichtung bei Vorwärtsfahrt zur Verfügung stellen. Durch die Maßnahme, dass jeweils die weiter laufstreifeninnenseitig befindliche Längskante sich gegenüber einer Basisfläche der Erhebung in einer größeren Höhe befindet als die weiter laufstreifenaußenseitig befindliche Längskante kann letztere besonders effektiv als Griffkante ausgeführt werden. Die in unterschiedlichen Höhen ausgeführten Erhebungen gestatten eine besonders vorteilhafte Gewichtsoptimierung des Laufstreifens.

Bei einer bevorzugten Ausführung weisen die Erhebungen eine umso größere Höhe auf je näher sie zur Seitenwand positioniert sind. Diese Maßnahme ist für eine Gewichtsoptimierung durch Verteilung des Gummivolumens der Erhebungen von der Laufstreifenmitte bis zu den Seitenwänden besonders vorteilhaft.

Besonders vorteilhaft ist daher auch eine Ausführung, bei der die Erhebung(en), die zwischen den bei der Laufstreifenmitte und bei den Seitenwänden befindlichen Erhebung(en) angeordnet ist bzw. sind, eine Höhe aufweisen bzw. aufweist, die kleiner ist als die Höhe der am höchsten ausgeführten Erhebung(en) und größer ist als die Höhe der am niedrigsten ausgeführten Erhebung(en).

Eine besonders vorteilhafte Anordnung der durch die Erhebungen vorliegenden Griffkanten liegt bei einer Ausführung vor, bei welcher die Erhebungen zwischen der Laufstreifenmitte und den Seitenwänden in Reihen angeordnet sind, welche jeweils zumindest drei Erhebungen unterschiedlicher Höhe umfassen.

Bei Fahrzeugreifen mit einem weitgehend "glatt" ausgeführten Laufstreifen sind die Erhebungen vorteilhafterweise unmittelbar auf der Basisfläche des Laufstreifens ausgebildet.

Bei anderen Typen von Fahrzeugreifen mit Stollen im Laufstreifen, die jeweils eine Deckfläche aufweisen, sind die Deckflächen der Stollen die Basisflächen der Erhebungen.

Die Griff- und Bremseigenschaften des Laufstreifens, insbesondere auf rauem Untergrund, sind bei einer Ausführung besonders gut, bei welcher die Erhebungen viereckige Deckflächen aufweisen, wobei die Längskanten durch kürzere Seitenkanten miteinander verbunden sind, die in axialer Richtung oder unter einem Winkel von bis zu 30° zur axialen Richtung verlaufen.

Eine weitere, für die laufrichtungsgebundene Ausführung des Laufstreifens besonders vorteilhafte Maßnahme besteht darin, dass die Längskanten der Deckflächen der Erhebungen beginnend bei ihren weiter laufstreifenaußenseitig befindlichen Enden in Richtung ihrer weiter laufstreifeninnenseitig befindlichen Enden abfallen, wobei an ihrem laufstreifenseitig befindlichen Ende die weiter laufstreifeninnenseitig befindliche Längskante eine senkrecht zur Basisfläche ermittelte Höhe aufweist, die um 0,10 mm bis 0,30 mm größer ist als die Höhe der weiter laufstreifeninnenseitig verlaufenden Längskante an ihrem laufstreifenaußenseitig befindlichen Ende.

Griffkanten an den weiter zur Seitenwand befindlichen Erhebungen sind bei Kurvenfahrt besonders effektiv. Die weiter laufstreifeninnenseitig befindlichen Erhebungen bzw. die näher oder bei der Laufstreifenmitte befindlichen Erhebungen können dabei auch Deckflächen mit zumindest einer Längskante aufweisen, die in Richtung Basisfläche derart abfällt, dass sich ihr laufstreifeninnenseitig befindliches Ende auf dem Niveau der Basisfläche befindet.

Für die mit den Erhebungen erzielbaren Effekte ist es ferner vorteilhaft, wenn die weiter laufstreifeninnenseitig befindlichen Enden der Längskanten der Erhebungen eine Höhendifferenz von 0,05 mm bis 1,00 mm, insbesondere von 0,10 mm bis 0,40 mm, aufweisen, wobei sich das Ende der weiter laufstreifeninnenseitig befindlichen Längskante in der größeren Höhe befindet. Diese Maßnahme ist auch für eine Geräusch- und Gewichtsoptimierung des Laufstreifens vorteilhaft.

Es ist daher auch von Vorteil, wenn die Erhebungen geringe Höhen aufweisen, insbesondere wirken die Kanten der Erhebungen auch bei geringer Höhe als Brems- und Griffkanten. Dabei betragen bevorzugt die jeweils gegenüber der Basisfläche senkrecht ermittelten Höhen der laufstreifeninnenseitig befindlichen Enden der weiter laufstreifeninnenseitig verlaufenden Längskanten der Erhebungen 0,10 mm bis 1,50 mm, insbesondere 0,20 mm bis 0,60 mm, die gegenüber der Basisfläche senkrecht ermittelten Höhen der laufstreifenaußenseitig befindlichen Enden der weiter laufstreifeninnenseitig verlaufenden Längskanten weisen Höhen auf, die 0,00 mm bis 1,00 mm, insbesondere bis zu 0,50 mm, betragen.

Eine vorteilhafte Ausführungsform ist dadurch gegeben, dass der Fahrzeugreifen ein Fahrzeugluftreifen ist.

Eine vorteilhafte Ausführungsform ist dadurch gegeben, dass der Fahrzeugreifen ein Fahrzeugreifen für ein Leichtfahrzeug, bevorzugt für ein Fahrrad und/oder Motorrad und/oder einen Rollstuhl, besonders bevorzugt für ein Fahrrad, ist.

Es kann sich entsprechend um einen Leichtfahrzeugreifen, bevorzugt um einen Fahrradreifen und/oder um einen Motorradreifen und/oder um einen Rollstuhlreifen, besonders bevorzugt um einen Fahrradreifen, handeln.

Der Begriff "Leichtfahrzeug" bezeichnet im Sinne der Anmeldung Fahrzeuge mit einer Leermasse von maximal 425 kg (ohne Batterien bei Elektrofahrzeugen), bevorzugt Fahrräder und/oder Rollstühle und/oder Motorräder und/oder Fahrzeuge der Fahrzeugklasse L im Sinne der **EU** Verordnung 168/2013, welche jeweils die Erfordernisse der Leermasse von maximal 425 kg erfüllen.

Das Leichtfahrzeug, bevorzugt Fahrrad, kann rein mit Muskelkraft angetrieben sein und somit keinen Antriebsmotor aufweisen. Das Leichtfahrzeug, bevorzugt Fahrrad, kann aber auch einen Antriebsmotor, bevorzugt einen Elektromotor, zum Antrieb des Leichtfahrzeuges aufweisen. Der bevorzugt elektrische Antriebsmotor kann dabei als Hilfsmotor zur Trittunterstützung oder als alleiniger Antrieb ausgelegt sein. Das Leichtfahrzeug, bevorzugt Fahrrad, kann als Lastenfahrzeug ausgelegt sein. Das Leichtfahrzeug, bevorzugt Fahrrad, kann zwei, drei, vier oder mehr Räder aufweisen.

Kraftfahrzeuge der Fahrzeugklasse L im Sinne der der EU Verordnung 168/2013 umfassen insbesondere Fahrzeuge gemäß den Klassen L1e und/oder L2e und/oder L3e und/oder L4e und/oder L5e und/oder L6e.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 eine Ansicht eines Umfangabschnittes eines Fahrradreifens,
Fig. 2 einen in die Ebene projizierten Umfangsabschnitt des Laufstreifens des Fahrradreifens und
Fig. 3 eine schematische vergrößerte Schrägansicht einer Ausführung einer blockartigen Erhebung des Laufstreifens.

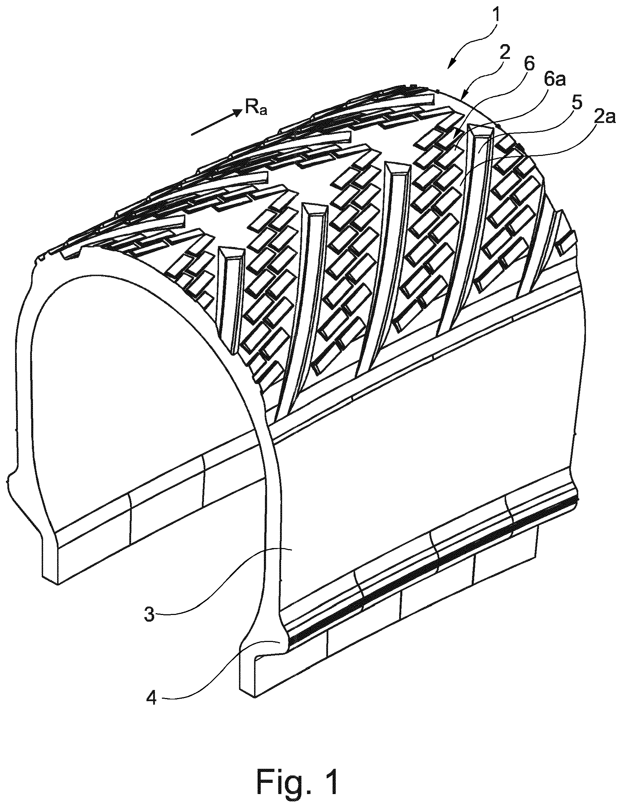

Fig. 1 zeigt einen Umfangsabschnitt eines Ausführungsbeispiels eines für den urbanen Einsatz und ferner für die Einsatzgebiete Cargo, Trekking, Race oder Gravel geeigneten Fahrradreifens 1 mit einem Laufstreifen 2, Seitenwänden 3 und Wulstbereichen 4. Die weiteren, üblicherweise im Inneren des Fahrradreifens 1 vorgesehenen Bauteile, wie eine mit einer Festigkeitsträgerlage versehene Karkasse, sind nicht dargestellt.

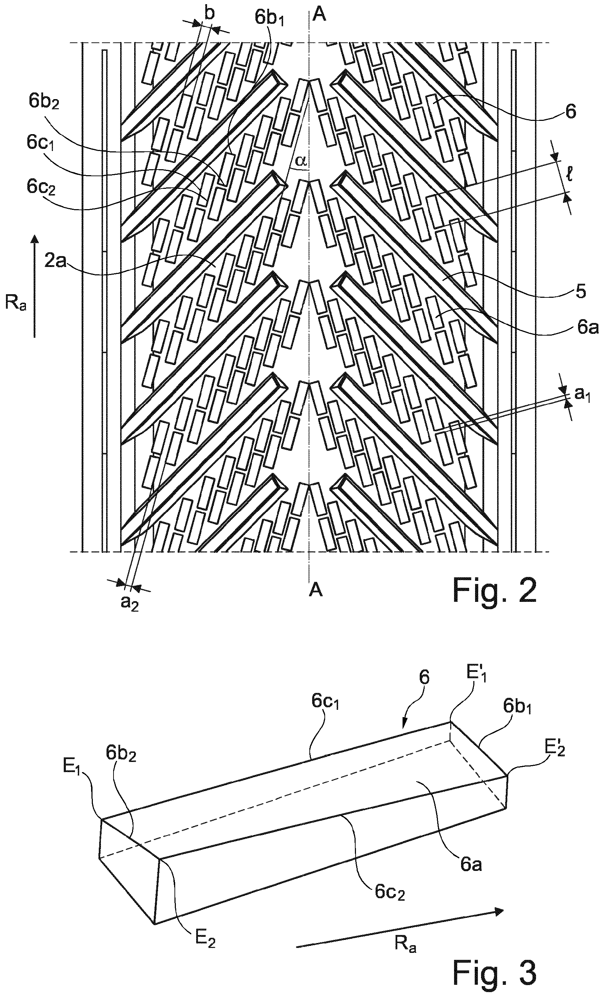

Der Fahrradreifen 1 weist im Laufstreifen 2 eine Profilierung auf, welche beim gezeigten Ausführungsbeispiel V-förmig zueinander verlaufende, knapp vor der durch die Linie A-A (Fig. 2) gekennzeichneten Mittelumfangslinie des Laufstreifens 2 endende, in jeder Laufstreifenhälfte parallel zueinander angeordnete Schrägrillen 5 und zwischen den Schrägrillen 5 ausgebildete und analog zu den Schrägrillen 5 verlaufende Reihen aus blockartigen Erhebungen 6 aufweist. Durch die insgesamt V-förmig zueinander verlaufenden Schrägrillen 5 und die Reihen aus Erhebungen 6 ist der Laufstreifen 2 laufrichtungsgebunden gestaltet, sodass bei der Montage des Fahrradreifens 1 auf eine bestimmte Abrollrichtung bei Vorwärtsfahrt zu achten ist, nämlich derart, dass die laufstreifeninnenseitig befindlichen Enden der Schrägrillen 5 bei Vorwärtsfahrt zuerst in den Untergrund eintreten. Diese Abrollrichtung ist in den Figuren 1 und 2 mit dem Pfeil Rₐ gekennzeichnet.

Die Laufstreifenbereiche außerhalb der Schrägrillen 5 bilden eine Basisfläche 2a, welche, beim gezeigten Ausführungsbeispiel, abgesehen von den bereits erwähnten blockartigen Erhebungen 6, keine weiteren Profilstrukturen aufweist. Beim dargestellten Ausführungsbeispiel sind ferner die in jeder Laufstreifenhälfte zum Großteil zwischen den in Umfangsrichtung aufeinanderfolgenden Schrägrillen 5 vorgesehenen blockartigen Erhebungen 6 langgestreckt rechteckig ausgebildet und in jeder Reihe paarweise angeordnet. Bei jedem Paar aus blockartigen Erhebungen 6 schließen die beiden Erhebungen 6 miteinander fluchtend aneinander an, wobei ihr gegenseitiger Abstand a₁ (Fig. 2) in der Größenordnung von 1,00 mm bis 5,00 mm, insbesondere 1,50 mm bis 3,00 mm, beträgt. In jeder Reihe verlaufen die Paare von Erhebungen 6 parallel zueinander, ihr gegenseitiger Abstand a₂ (Fig. 2) beträgt ebenfalls in der Größenordnung von 1,00 mm bis 5,00 mm, insbesondere 1,50 mm bis 3,00 mm. Nachdem die Reihen aus Erhebungen 6 schräg über die jeweilige Laufstreifenhälfte verlaufen, sind die Paare aus Erhebungen 6 entsprechend gegeneinander versetzt. Bei einer alternativen, nicht dargestellten Ausführung besteht jede Reihe aus aufeinanderfolgenden einzelnen Erhebungen 6.

Gemäß Fig. 2 weisen die Erhebungen 6 bei der dargestellten Ausführung jeweils eine langgestreckt rechteckige, ebene Deckfläche 6a mit zwei schmalen Seitenkanten 6b₁ und 6b₂, die beispielsweise eine Breite b von 1,50 mm bis 2,00 mm besitzen, und zwei langen Seitenkanten 6c₁ und 6c₂, die beispielsweise eine Länge I von 2,50 mm bis 3,50 mm besitzen, auf. Insbesondere weisen sämtliche Erhebungen 6 gleich große Deckflächen 6a oder Deckflächen 6a auf, deren Größen nur unwesentlich voneinander abweichen. Gegenüber der Umfangsrichtung (Mittelumfangslinie A-A) des Laufstreifens 2 verlaufen in jeder Laufstreifenhälfte die langen Seitenkanten 6c₁, 6c₂ der Erhebungen 6 unter einem Winkel α von 10° bis 30°, insbesondere 15° bis 25°, und gleichsinnig zu den Schrägrillen 5 geneigt.

Bei der in Fig. 1 und Fig. 2 gezeigten Ausführung sind jeweils zwischen zwei in Umfangsrichtung benachbarten Schrägrillen 5 jeweils acht Paare aus Erhebungen 6 vorgesehen, wobei bei alternativen Ausführungen zwischen der Laufstreifenmitte und der Seitenwand 3 jeweils zumindest drei einzelne Erhebungen 6 oder drei Paare aus Erhebungen 6 vorgesehen sind, die sich auf eine bestimmte Weise, wie nachfolgend insbesondere anhand der Fig. 3 beschrieben wird, voneinander unterscheiden.

Fig. 3 zeigt eine stark vergrößerte schematische Ansicht einer Erhebung 6 aus der in Fig. 1 und Fig. 2 linken Laufstreifenhälfte. Von den beiden langen Seitenkanten 6c₁ und 6c₂ ist die Seitenkante 6c₂ die der Laufstreifenmitte (Mittelumfangslinie A-A) zugewandte Seitenkante und die "aktive" Griffkante, die der Laufstreifenmitte (Mittelumfangslinie A-A) abgewandte Seitenkante 6c₁ eine passive Kante. Bei jeder Erhebung 6 verläuft die "aktive" Griffkante (Seitenkante 6c₂) gegenüber der Basisfläche 2a (vergl. Fig. 2) in einer größeren Höhe als die passive Kante (Seitenkante 6c₁). Zusätzlich werden die Höhen beider Seitenkanten 6c₁ und 6c₂ beginnend bei ihren weiter laufstreifenaußenseitig befindlichen Enden E₁, E₂ in Richtung ihrer weiter laufstreifeninnenseitig befindlichen Enden E'₁, E'₂ geringer, wobei an ihrem laufstreifenaußenseitig befindlichen Ende E₂ die Seitenkante 6c₂ eine senkrecht zur Basisfläche 2a ermittelte Höhe aufweist, die um 0,10 mm bis 0, 30 mm größer ist als die Höhe der Seitenkante 6c₁ am laufstreifenaußenseitig befindlichen Ende E₁. Zu den laufstreifeninnenseitig befindlichen Enden E'₁, E'₂ können beide Seitenkanten 6c₁ und 6c₂ bis auf das Niveau der Basisfläche 2a abfallen oder eine Höhendifferenz von 0,05 mm bis 1,00 mm, insbesondere von 0,10 mm bis 0,40 mm, aufweisen, wobei die Seitenkante 6c₂ höher endet als die Seitenkante 6c₁.

Entsprechend der geschilderten Verläufe der Seitenkanten 6c₁ und 6c₂ ist der Verlauf der Seitenkanten 6b₁ und 6b₂. Die Seitenkante 6b₁ ist jene, mit welcher jede Erhebung 6 beim Abrollen des Reifens bei Vorwärtsfahrt zuerst in den Untergrund eintritt. Die dieser gegenüberliegende Seitenkante 6b₂ ist eine "aktive", für die Bremsperformance vorteilhafte Kante.

Bezüglich der Ausgestaltung der Erhebungen 6, die im Bereich zwischen der Mittelumfangslinie A-A und der Seitenwand 3 aufeinanderfolgen, gilt insbesondere, dass die aktiven Griffkanten (Seitenkanten 6c₂) umso höher sind, je näher sich eine Erhebung 6 bei der Seitenwand 3 befindet. Dabei können auch zwei oder drei gleich gestaltete Erhebungen 6 unmittelbar aufeinanderfolgen, wobei zumindest drei Erhebungen 6 zwischen der Mittelumfangslinie A-A und der Seitenwand 3 vorhanden sind, bei welchen die Höhe ihrer aktiven Griffkanten (Seitenkanten 6c₂) umso größer ist, je näher sie sich zur Seitenwand 3 befinden. Die gegenüber der Basisfläche 2a senkrecht ermittelten Höhen der laufstreifenaußenseitig befindlichen Enden E₂ der Griffkanten (Seitenkanten 6c₂) betragen bevorzugt 0,10 mm bis 1,50 mm, insbesondere 0,20 mm bis 0,60 mm, die gegenüber der Basisfläche 2a senkrecht ermittelten Höhen der laufstreifeninnenseitig befindlichen Enden E'₂ der Griffkanten (Seitenkanten 6c₂) 0,00 mm bis 1,00 mm, insbesondere bis 0,50 mm.

Bei einer nicht dargestellten Variante des Laufstreifens befinden sich die Erhebungen auf Stollen des Laufstreifens, sodass die Deckflächen der Stollen jeweils Bezugs-Basisflächen bilden. Bei einer weiteren nicht dargestellten Variante des Laufstreifens sind die Erhebungen nicht in Reihen angeordnet, sondern in jeder Laufstreifenhälfte gegeneinander versetzt, mit bei der Laufstreifenmitte, bei den Seitenwänden und dazwischen befindlichen Erhebungen.

Gemäß der Erfindung ausgeführte Reifen können ferner Fahrzeugreifen anderen Typs sein. Erfindungsgemäß ausgeführte Reifen können Fahrzeugluftreifen, bevorzugt Leichtfahrzeugreifen, besonders bevorzugt Motorradreifen und/oder Fahrradreifen und/oder Rollstuhlreifen, sein.

### Bezugszeichenliste

- 1: Fahrradreifen
- 2: Laufstreifen
- 2a: Basisfläche
- 3: Seitenwand
- 4: Wulstbereich
- 5: Schrägrille
- 6: blockartige Erhebung
- 6a: Deckfläche
- 6b₁, 6b₂: schmale Seitenkante
- 6c₁, 6c₂: lange Seitenkante
- α: Winkel
- A-A: Mittelumfangslinie
- a₁: Abstand (Erhebungspaare)
- a₂: Abstand (von Paar zu Paar)
- b: Breite (6b₁, 6b₂)
- E₁, E₂: laufstreifenaußenseitig befindliche Enden
- E'₁, E'₂: laufstreifeninnenseitig befindliche Enden
- I: Länge (6c₁, 6c₂)
- Rₐ: Abrollrichtung bei Vorwärtsfahrt

## Patentansprüche

1. Fahrzeugreifen, bevorzugt für ein Leichtfahrzeug, besonders bevorzugt für ein Motorrad und/oder ein Fahrrad und/oder einen Rollstuhl, mit einem laufrichtungsgebunden gestalteten, eine definierten Abrollrichtung bei Vorwärtsfahrt sowie eine Mittelumfangslinie (Linie A-A) aufweisenden, profilierten Laufstreifen (2), Seitenwänden (3) und Wulstbereichen (4), wobei der Laufstreifen (2) in Umfangsrichtung langgestreckte blockartige Erhebungen (6) aufweist, zu welchen am nächsten zur Mittelumfangslinie (Linie A-A) und am nächsten zu den Seitenwänden (3) befindliche Erhebungen (6) gehören, wobei jede Erhebung (6) jeweils eine Deckfläche (6a) mit zwei in Richtung der langgestreckten Gestaltung verlaufenden Längskanten (6c₁, 6c₂) - eine weiter laufstreifenaußenseitig und einer weiter laufstreifeninnenseitig befindliche Längskante (6c₁, 6c₂) - aufweist,
**dadurch gekennzeichnet,**
**dass** zu den Erhebungen (6) solche gehören, welche zwischen den am nächsten zur Mittelumfangslinie (Linie A-A) befindlichen Erhebungen (6) und den am nächsten zu den Seitenwänden (3) befindlichen Erhebungen (6) angeordnet sind, wobei die Längskanten (6c₁, 6c₂) jeweils in sämtlichen Erhebungen (6) gleichsinnig geneigt unter einem Winkel (α) von 10° bis 30°, insbesondere 15° bis 25°, zur Umfangsrichtung verlaufen, wobei jeweils die weiter laufstreifeninnenseitig befindliche Längskante (6c₂) sich gegenüber einer Basisfläche der Erhebung (6) in einer größeren Höhe befindet als die weiter laufstreifenaußenseitig befindliche Längskante (6c₁) und wobei - bezüglich der Ausgestaltung der Erhebungen (6), die im Bereich zwischen der Mittelumfangslinie (Linie A-A) und der Seitenwand (3) aufeinanderfolgen - jeweils die am nächsten zur Mittelumfangslinie (Linie A-A) befindliche Erhebung (6), bezogen auf die weiter laufstreifeninnenseitig befindliche Längskante (6c₂), die am niedrigsten ausgeführte Erhebung (6) und die am nächsten zur Seitenwand (3) befindliche Erhebung (6), bezogen auf die weiter laufstreifeninnenseitig befindliche Längskante (6c₂), die am höchsten ausgeführte Erhebung (6) ist.

2. Fahrzeugreifen nach Anspruch 1, **dadurch gekennzeichnet, dass** die Erhebungen (6) eine umso größere Höhe aufweisen je näher sie zur Seitenwand (3) positioniert sind.

3. Fahrzeugreifen nach Anspruch 1 oder 2, **dadurch gekennzeichnet, dass** die Erhebung(en) (6), die zwischen den bei der Laufstreifenmitte und bei den Seitenwänden (3) befindlichen Erhebung(en) (6) angeordnet ist bzw. sind, eine Höhe aufweisen bzw. aufweist, die kleiner ist als die Höhe der am höchsten ausgeführten Erhebung(en) (6) und größer ist als die Höhe der am niedrigsten ausgeführten Erhebung(en) (6).

4. Fahrzeugreifen nach einem der Ansprüche 1 bis 3, **dadurch gekennzeichnet, dass** die Erhebungen (6) zwischen der Laufstreifenmitte (A-A) und den Seitenwänden (3) in Reihen angeordnet sind, welche jeweils zumindest drei Erhebungen (6) unterschiedlicher Höhen umfassen.

5. Fahrzeugreifen nach einem der Ansprüche 1 bis 4, **dadurch gekennzeichnet, dass** die Erhebungen (6) unmittelbar auf einer Basisfläche (2a) des Laufstreifens (2) ausgebildet sind.

6. Fahrzeugreifen nach einem der Ansprüche 1 bis 4 mit einem Laufstreifen mit Stollen mit jeweils einer Deckfläche, **dadurch gekennzeichnet, dass** die Deckflächen von Stollen die Basisflächen der Erhebungen (6) sind.

7. Fahrzeugreifen nach einem der Ansprüche 1 bis 6, **dadurch gekennzeichnet, dass** die Erhebungen (6) viereckige, insbesondere parallelogrammförmige, Deckflächen (6a) aufweisen, deren Längskanten (6c₁, 6c₂) durch kürzere Seitenkanten (6b₁, 6b₂) verbunden sind, die in axialer Richtung oder unter einem Winkel von bis zu 30° zur axialen Richtung verlaufen.

8. Fahrzeugreifen nach einem der Ansprüche 1 bis 7, **dadurch gekennzeichnet, dass** die Längskanten (6c₁, 6c₂) der Deckflächen (6a) der Erhebungen (6) beginnend bei ihren weiter laufstreifenaußenseitig befindlichen Enden (E₁, E₂) in Richtung ihrer weiter laufstreifeninnenseitig befindlichen Enden (E'₁, E'₂) abfallen, wobei an ihrem laufstreifenaußenseitig befindlichen Ende (E₂) die weiter laufstreifeninnenseitig befindliche Längskante (6c₂) eine senkrecht zur Basisfläche (2a) ermittelte Höhe aufweist, die um 0,10 mm bis 0,30 mm größer ist als die Höhe der weiter laufstreifeninnenseitig verlaufenden Längskante (6c₁) an ihrem laufstreifenaußenseitig befindlichen Ende (E₁).

9. Fahrzeugreifen nach einem der Ansprüche 1 bis 8, **dadurch gekennzeichnet, dass** näher oder bei der Laufstreifenmitte (A-A) befindliche Erhebungen (6) Deckflächen (6a) mit zumindest einer Längskante (6c₁, 6c₂) aufweisen, die in Richtung Basisfläche (2a) derart abfällt, dass sich ihr laufstreifeninnenseitig befindliches Ende (E'₁, E'₂) auf dem Niveau der Basisfläche (2a) befindet.

10. Fahrzeugreifen nach einem der Ansprüche 1 bis 9, **dadurch gekennzeichnet, dass** die weiter laufstreifeninnenseitig befindlichen Enden (E'₁, E'₂) der Längskanten (6c₁, 6c₂) der Erhebungen (6) eine Höhendifferenz von 0,05 mm bis 1,00 mm, insbesondere von 0,10 mm bis 0,40 mm, aufweisen, wobei sich das Ende (E₂') der weiter laufstreifeninnenseitig befindliche Längskante (6c₂) in der größeren Höhe befindet.

11. Fahrzeugreifen nach einem der Ansprüche 1 bis 10, **dadurch gekennzeichnet, dass** die jeweils gegenüber der Basisfläche (2a) senkrecht ermittelten Höhen der laufstreifenaußenseitig befindlichen Enden (E₂) der weiter laufstreifeninnenseitig verlaufenden Längskanten (6c₂) der Erhebungen (6) 0,10 mm bis 1,50 mm, insbesondere 0,20 mm bis 0,60 mm, betragen und die gegenüber der Basisfläche (2a) senkrecht ermittelten Höhen der laufstreifeninnenseitig befindlichen Enden (E'₂) der weiter laufstreifeninnenseitig verlaufenden Längskanten (6c₂) 0,00 mm bis 1,00 mm, insbesondere bis 0,50 mm, betragen.

12. Fahrzeugreifen nach einem der Ansprüche 1 bis 11, **dadurch gekennzeichnet, dass** es sich um einen Fahrradreifen handelt.

## Claims

1. Vehicle tyre, preferably for a light vehicle, particularly preferably for a motorcycle and/or a bicycle and/or a wheelchair, with a directional profiled tread (2) having a defined rolling direction during forward travel and also a central circumferential line (line A-A), sidewalls (3) and bead regions (4), wherein the tread (2) has circumferentially elongated block-like elevations (6), including elevations (6) located closest to the central circumferential line (line A-A) and elevations (6) located closest to the sidewalls (3), wherein each elevation (6) respectively has a top area (6a) with two longitudinal edges (6c₁, 6c₂) running in the direction of the elongated design - one longitudinal edge (6c₁) located further outside the tread and one longitudinal edge (6c₂) located further inside the tread, **characterized**
**in that** the elevations (6) include those which are arranged between the elevations (6) located closest to the central circumferential line (line A-A) and the elevations (6) located closest to the sidewalls (3), wherein the longitudinal edges (6c₁, 6c₂) are respectively inclined in the same direction in all elevations (6) at an angle (α) of 10° to 30°, in particular 15° to 25°, in relation to the circumferential direction, wherein in each case the longitudinal edge (6c₂) located further inside the tread is at a greater height from a base area of the elevation (6) than the longitudinal edge (6c₁) located further outside the tread and wherein - with respect to the design of the elevations (6) that follow one another in the region between the central circumferential line (line A-A) and the sidewall (3) - in each case the elevation (6) located closest to the central circumferential line (line A-A), with respect to the longitudinal edge (6c₂) located further inside the tread, is the lowest elevation (6) and the elevation (6) located closest to the sidewall (3), with respect to the longitudinal edge (6c₂) located further inside the tread, is the highest elevation (6).

2. Vehicle tyre according to Claim 1, **characterized in that** the elevations (6) have all the greater a height the closer they are positioned to the sidewall (3).

3. Vehicle tyre according to Claim 1 or 2, **characterized in that** the elevation(s) (6) which is or are arranged between the elevation(s) (6) located at the centre of the tread and at the sidewalls (3) has or have a height which is less than the height of the highest elevation(s) (6) and greater than the height of the lowest elevation(s) (6).

4. Vehicle tyre according to one of Claims 1 to 3, **characterized in that** the elevations (6) between the centre of the tread (A-A) and the sidewalls (3) are arranged in rows which respectively comprise at least three elevations (6) of different heights.

5. Vehicle tyre according to one of Claims 1 to 4, **characterized in that** the elevations (6) are formed directly on a base area (2a) of the tread (2).

6. Vehicle tyre according to one of Claims 1 to 4, with a tread comprising lugs that each have a top area, **characterized in that** the top areas of lugs are the base areas of the elevations (6).

7. Vehicle tyre according to one of Claims 1 to 6, **characterized in that** the elevations (6) have quadrangular, in particular parallelogram-shaped, top areas (6a), the longitudinal edges (6c₁, 6c₂) of which are connected by shorter side edges (6b₁, 6b₂), which run in the axial direction or at an angle of up to 30° to the axial direction.

8. Vehicle tyre according to one of Claims 1 to 7, **characterized in that**, beginning at its ends (E₁, E₂) located further outside the tread, the longitudinal edges (6c₁, 6c₂) of the top areas (6a) of the elevations (6) slope down in the direction of their ends (E'₁, E'₂) located further inside the tread, wherein, at its end (E₂) located outside the tread, the longitudinal edge (6c₂) located further inside the tread has a height determined perpendicularly to the base area (2a) that is 0.10 mm to 0.30 mm greater than the height of the longitudinal edge (6c₁) running further inside the tread at its end (E₁) located outside the tread.

9. Vehicle tyre according to one of Claims 1 to 8, **characterized in that** elevations (6) located closer to or at the centre of the tread (A-A) have top areas (6a) with at least one longitudinal edge (6c₁, 6c₂) which slopes down in the direction of the base area (2a) in such a way that its end (E'₁, E'₂) located inside the tread is at the level of the base area (2a).

10. Vehicle tyre according to one of Claims 1 to 9, **characterized in that** the ends (E'₁, E'₂) located further inside the tread of the longitudinal edges (6c₁, 6c₂) of the elevations (6) have a difference in height of 0.05 mm to 1.00 mm, in particular of 0.10 mm to 0.40 mm, wherein the end (E₂') of the longitudinal edge (6c₂) located further inside the tread is at the greater height.

11. Vehicle tyre according to one of Claims 1 to 10, **characterized in that** the heights, determined in each case perpendicularly with respect to the base area (2a), of the ends (E₂) located outside the tread of the longitudinal edges (6c₂) running further inside the tread of the elevations (6) are 0.10 mm to 1.50 mm, in particular 0.20 mm to 0.60 mm, and the heights, determined perpendicularly with respect to the base area (2a), of the ends (E'₂) located inside the tread of the longitudinal edges (6c₂) running further inside the tread are 0.00 mm to 1.00 mm, in particular up to 0.50 mm.

12. Vehicle tyre according to one of Claims 1 to 11, **characterized in that** it is a bicycle tyre.

## Revendications

1. Pneu de véhicule, de manière préférée pour un véhicule léger, de manière particulièrement préférée pour une motocyclette et/ou une bicyclette et/ou un fauteuil roulant, avec une bande de roulement profilée (2) liée à la direction de roulement, comportant une direction de roulement définie en marche avant ainsi qu'une ligne périphérique centrale (ligne A-A), des parois latérales (3) et des zones de talon (4), la bande de roulement (2) comportant des parties surélevées en forme de bloc allongées (6) dans la direction périphérique, auxquelles appartiennent des parties surélevées (6) les plus proches de la ligne périphérique centrale (ligne A-A) et les plus proches des parois latérales (3), chaque partie surélevée (6) comportant respectivement une surface de recouvrement (6a) avec deux bords longitudinaux (6c₁, 6c₂) s'étendant dans la direction de la forme allongée - un bord longitudinal se trouvant davantage côté extérieur de la bande de roulement et un bord longitudinal se trouvant davantage côté intérieur de la bande de roulement (6c₁, 6c₂),
**caractérisé en ce**
**qu'**appartiennent aux parties surélevées (6) ces parties surélevées qui sont disposées entre les parties surélevées (6) les plus proches de la ligne périphérique centrale (ligne A-A) et les parties surélevées (6) les plus proches des parois latérales (3), les bords longitudinaux (6c₁, 6c₂) s'étendant chacun dans toutes les parties surélevées (6) avec une inclinaison dans le même sens selon un angle (α) de 10° à 30°, en particulier de 15° à 25°, par rapport à la direction périphérique, le bord longitudinal (6c₂) situé davantage côté intérieur de la bande de roulement se trouvant par rapport à une surface de base de la partie surélevée (6) à une hauteur plus importante que le bord longitudinal (6c₁) se trouvant davantage côté extérieur de la bande de roulement et, en ce qui concerne la configuration des parties surélevées (6), qui se suivent les unes les autres dans la zone entre la ligne périphérique centrale (ligne A-A) et la paroi latérale (3) - la partie surélevée (6) la plus proche de la ligne périphérique centrale (ligne A-A) étant, par rapport au bord longitudinal (6c₂) davantage côté intérieur de la bande de roulement, la partie surélevée (6) la plus basse et la partie surélevée (6) la plus proche de la paroi latérale (3) étant, par rapport au bord longitudinal (6c₂) se trouvant davantage côté intérieur de la bande de roulement, étant la partie surélevée (6) la plus haute.

2. Pneu de véhicule selon la revendication 1, **caractérisé en ce que** les parties surélevées (6) comportent une hauteur d'autant plus grande qu'elles sont positionnées davantage à proximité de la paroi latérale (3).

3. Pneu de véhicule selon la revendication 1 ou 2, **caractérisé en ce que** la ou les parties surélevées (6), qui sont disposées entre les parties surélevées (6) se trouvant à proximité du centre de la bande de roulement et des parois latérales (3), comportent une hauteur, qui est inférieure à la hauteur de la ou des parties surélevées (6) les plus hautes et qui est supérieure à la hauteur de la ou des parties surélevées (6) les plus basses.

4. Pneu de véhicule selon l'une des revendications 1 à 3, **caractérisé en ce que** les parties surélevées (6) entre le centre de bande de roulement (A-A) et les parois latérales (3) sont disposées en rangées, qui comprennent chacune au moins trois parties surélevées (6) de hauteurs différentes.

5. Pneu de véhicule selon l'une des revendications 1 à 4, **caractérisé en ce que** les parties surélevées (6) sont formées directement sur une surface de base (2a) de la bande de roulement (2).

6. Pneu de véhicule selon l'une des revendications 1 à 4, avec une bande de roulement avec des crampons avec chacun une surface de recouvrement, **caractérisé en ce que** les surfaces de recouvrement de crampons sont les surfaces de base des parties surélevées (6).

7. Pneu de véhicule selon l'une des revendications 1 à 6, **caractérisé en ce que** les parties surélevées (6) comportent des surfaces de recouvrement (6a) quadrangulaires, en particulier en forme de parallélogramme, dont les bords longitudinaux (6c₁, 6c₂) sont reliés par des bords latéraux (6b₁, 6b₂) plus courts, qui s'étendent dans la direction axiale ou selon un angle allant jusqu'à 30° par rapport à la direction axiale.

8. Pneu de véhicule selon l'une des revendications 1 à 7, **caractérisé en ce que** les bords longitudinaux (6c₁, 6c₂) des surfaces de recouvrement (6a) des parties surélevées (6) descendent en commençant par leurs extrémités se trouvant davantage côté extérieur de la bande de roulement (E₁, E₂) en direction de leurs extrémités se trouvant davantage côté intérieur de la bande de roulement (E'₁, E'₂), le bord longitudinal se trouvant davantage côté intérieur de la bande intérieure (6c₂) comportant sur son extrémité située côté extérieur de la bande de roulement (E₂) une hauteur déterminée perpendiculairement à la surface de base (2a), qui est supérieure de 0,10 mm à 0,30 mm à la hauteur du bord longitudinal (6c₁) s'étendant davantage côté intérieur de la bande de roulement sur son extrémité (E₁) située côté extérieur de la bande de roulement.

9. Pneu de véhicule selon l'une des revendications 1 à 8, **caractérisé en ce que** des parties surélevées (6) situées plus près ou à proximité du centre de bande de roulement (A-A) comportent des surfaces de recouvrement (6a) avec au moins un bord longitudinal (6c₁, 6c₂), qui descend en direction de la surface de base (2a) de telle manière que son extrémité située côté intérieur de la bande de roulement (E'₁, E'₂) se trouve au niveau de la surface de base (2a).

10. Pneu de véhicule selon l'une des revendications 1 à 9, **caractérisé en ce que** les extrémités se trouvant davantage côté intérieur de la bande de roulement (E'₁, E'₂) des bords longitudinaux (6c₁, 6c₂) des parties surélevées (6) présentent une différence de hauteur de 0,05 mm à 1,00 mm, en particulier de 0,10 mm à 0,40 mm, l'extrémité (E₂') du bord longitudinal se trouvant davantage côté intérieur de la bande de roulement (6c₂) se trouvant à la hauteur la plus élevée.

11. Pneu de véhicule selon l'une des revendications 1 à 10, **caractérisé en ce que** les hauteurs, respectivement déterminées perpendiculairement par rapport à la surface de base (2a), des extrémités se trouvant côté extérieur de la bande de roulement (E₂) des bords longitudinaux s'étendant davantage côté intérieur de la bande de roulement (6c₂) des parties surélevées (6) vont de 0,10 mm à 1,50 mm, en particulier de 0,20 mm à 0,60 mm, et les hauteurs déterminées perpendiculairement par rapport à la surface de base (2a) des extrémités se trouvant côté intérieur de la bande intérieure (E'₂) des bords longitudinaux s'étendant davantage côté intérieur de la bande de roulement (6c₂) vont de 0,00 mm à 1,00 mm, en particulier jusqu'à 0,50 mm.

12. Pneu de véhicule selon l'une des revendications 1 à 11, **caractérisé en ce qu'**il s'agit d'un pneu de bicyclette.
